Europäisches Patentamt

European Patent Office

Office européen des brevets

(11) Publication number: **0 042 292**
**A2**

# EUROPEAN PATENT APPLICATION

(21) Application number: 81302686.1

(22) Date of filing: 16.06.81

(51) Int. Cl.³: **G 09 G 1/16**

(30) Priority: 16.06.80 US 159719

(43) Date of publication of application: 23.12.81
Bulletin 81/51

(84) Designated Contracting States: **BE CH DE FR GB IT LI NL SE**

(71) Applicant: **Honeywell Information Systems Inc., 200 Smith Street, Waltham Massachusetts 02154 (US)**

(72) Inventor: **O'Keefe, David B., 17, Phillips Drive, Westford, Massachusetts (US)**
Inventor: **Miller, Robert C., 32, Holden Street, Braintree, Massachusetts (US)**

(74) Representative: **Harman, Michael Godfrey et al, Honeywell Control Systems Ltd. Patent Department Charles Square, Bracknell, Berks (GB)**

(54) Scrolling in video display unit.

(57) Characters stored in a memory 44 are displayed in rows and columns on a display means 11, the rows and columns being counted by a video row counter 49 and a video column counter 45. The address generator 53 for memory 44 includes a roll register 90, the count of which is added (mod the number of rows) to the video row count by a PROM 91, thereby scrolling the display; the PROM 91 is divided into blocks by the video row count, the blocks containing modular addition tables. However, certain blocks are instead filled with just the video row count. This results in the corresponding rows in memory 44 (used for system control information), stored in fixed locations in memory 44, appearing in fixed rows on the display, unaffected by scrolling of the variable data in most of the memory and display. A second PROM 92 combines the adjusted row count with the column count.

ACTORUM AG

## SCROLLING IN VIDEO DISPLAY UNIT

This invention relates to video display units, and more specifically to improvements in the scrolling of the display.

A video display unit normally comprises a display device on which characters are displayed in a matrix of rows and columns, a memory in which the characters to be displayed are stored and which is read out repeatedly to keep the display refreshed, and a timing unit having a chain of counters including a video row counter and a video column counter. Addressing means address the memory in response to the video row and columns counts, to read out the character to be displayed at the matrix location given by those counts.

Such a unit is frequently used in a system in which fresh data is continually being entered, e.g. from a keyboard. The data is transferred between the unit and a data processing system which provides back-up storage. This means that the memory will in due course become full. When this occurs, it is desirable to shift or scroll the display so that the oldest information, in the top row, is lost and the latest information appears in the bottom row, which has become empty as a result of scrolling.

The simplest system operates with a strict one-to-one correspondence between the memory locations and the character locations on the screen. This makes the memory addressing very simple, but it means that when the display is scrolled, the whole contents of the memory have to be correspondingly shifted up through the memory.

This is complicated and time-consuming, and it has accordingly become the practice to use addressing means which contain a roll register and which add the roll count and the video row count, modulus the number of rows. This means that the information in the memory stays in the same locations, and on scrolling, only the memory locations corresponding to the top row have to be cleared, these locations becoming those for the bottom row.

We have realized that while it is desirable for most of the display to be scrollable, it is also desirable to have a small portion of the display - e.g. the bottom row - reserved for system information, whereby control information and signals can be passed between the operator and the system. Thus READY signals, modes of operation, error messages, and the current row and column position of the cursor can be displayed.

It will be realized that this requirement cannot be satisfied with normal scrolling techniques, while it is still undesirable to have to shift a major part of the memory contents to achieve scrolling. The object of the present invention is to provide a system which can meet this requirement without requiring large-scale memory contents shifting.

Accordingly the present invention provides a video display system comprising:
a display device on which characters may be displayed in a matrix of rows and columns;
a memory having a plurality of storage locations which store the characters to be displayed;
video row and column counters which select the locations on the display device; and
addressing means which generate, from the video row and column counts, the memory address of each character to be displayed, including a roll register which defines the number of rows by which the display is to be scrolled and adding means which modularly add the roll count and the video row count,
characterized in that
the adding means comprise means which, in response to certain predetermined video row count or counts, utilize that count or those counts for addressing the memory unmodified by the roll count, whereby a predetermined section of the memory has its contents displayed on a predetermined row or rows while the remainder of the memory has its contents scrollable on the display.

A video display system embodying the invention will now be described, by way of example, with reference to the drawings, in which:

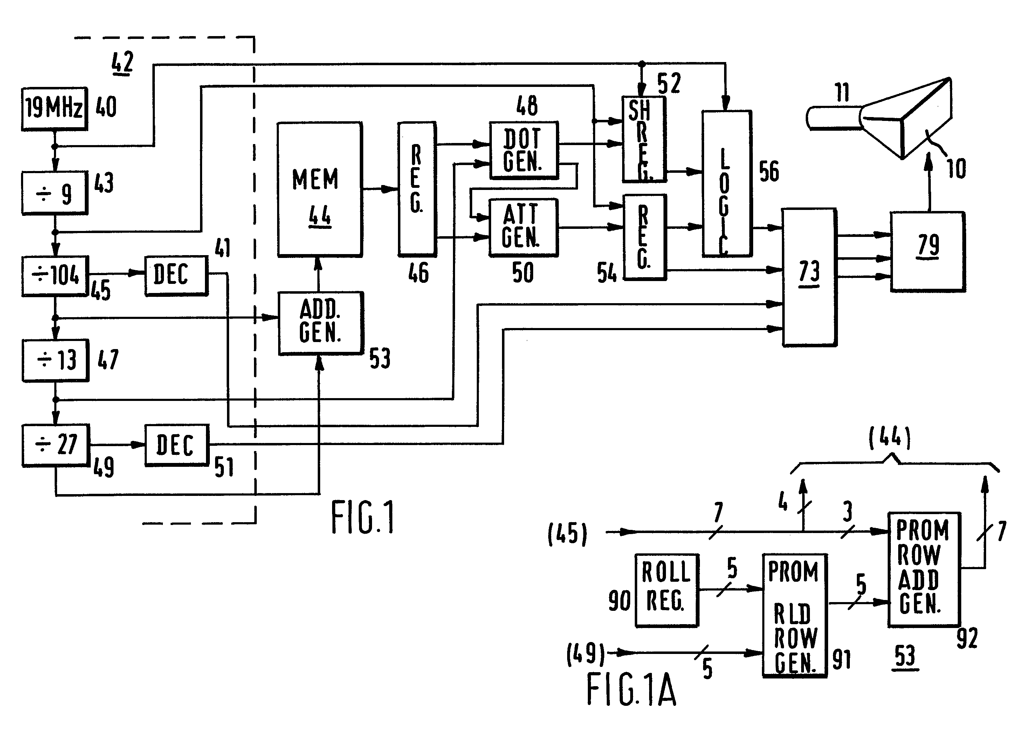

Figure 1 is a block diagram of the system, and

Figure 1A is a more detailed block diagram of the addressing unit.

The display is a matrix of characters, arranged in 80 columns (columns 0 to 79) and 25 rows (rows 0 to 24). Each row is subdivided into 13 lines (lines 0 to 12) and each column is subdivided into 9 dots (dots 0 to 8). Hence each character area, lying at the intersection of a row and a column, consists of a matrix of 9 x 13 elements. Of this matrix of elements, rows 0 and 12 and dots 0 and 8 are left black, as a border. Of the 7 x 11 elements within this border, the lowest line (line 11 of the 13 lines) is used for underlining the character displayed, and the line above that is used for descenders for those lower-case characters having descenders (characters g, j, p, etc.). The remaining area of 7 x 9 elements (dots 1 to 7 and lines 1 to 9) is used for displaying normal upper-case characters.

The display is generated by a display controller, Figure 1, which includes master scan logic 42. This consists of a master oscillator, a chain of dividers, and two sync decoders. The master oscillator is a 19.712 MHz oscillator 40, which generates pulses at the dot rate. This feeds a dot counter 43, which counts dots cyclically from 0 to 8. This feeds a column counter 45, which counts columns cyclically from 0 to 103. As noted above, there are 80 columns (0 to 79) in the display; column counter counts 80 to 103 are decoded by a horizontal sync decoder 41, which generates a horizontal sync pluse, and the time this pulse occupies is used for line flyback. Column counter 45 feeds a line counter 47, which counts lines cyclically from 0 to 12. This feeds a row counter 49, which counts rows cyclically from 0 to 26. As noted above, there are 25 rows ( 0 to 24) in the display; row counter counts 25 and 26 are decoded by a vertical sync decoder 51, which generates a vertical sync pulse, and the time this pulse occupies is used for vertical flyback.

The display is traced in the usual standard raster pattern. Hence to display a character, the 9 dots of line 0 of the character are displayed at the appropriate row and column location at the appropriate time, the line 0 portions of any remaining characters in the row are displayed, the line 1 portions of any preceding characters in the row are displayed, the 9 dots (0 to 8) of line 1 of the character being considered are displayed, and so on, until the 9 dots of line 12 of the character being considered have been displayed.

The display is capable of displaying 80 x 25 = 4000 characters. A refresh memory 44 is used to store the characters, and to keep the display refreshed by displaying the characters at the frame repetition rate of 60 Hz. The memory 44 comprises 2048 locations, each of 16 bits. Locations 0 to 79 are used for the characters in columns 0 to 79 or row 0, locations 80 to 159 for the characters in row 1, and so on up to locations 1920 to 1999 for the characters in row 24; the last 48 locations 2000 to 2047 are unused. This memory 44 is addressed by a memory address generator 53, which is fed with the column and row addresses from the column and row counters 45 and 49.

Each location of 16 bits in the refresh memory 44 stores the character to be displayed in the corresponding location of the display, in the form of a 7-bit ASCII code. In addition, 1 bit is used as a cursor bit (indicative of whether or not a cursor is to be displayed under the character), 5 bits are used as an attribute field, and 1 bit is used to indicate whether the attribute field of the preceding characters is to be continued unchanged or the fresh attribute field of the current character is to be used. There are 5 possible attributes, controlled by the 5 bits of the attribute field, as follows: Hide - a blank is displayed instead of the character stored in the memory; Blink - the character is to be flashed on and off repeatedly; Inverse - the character is to be displayed as dark elements on a light ground instead of the normal display as light elements on a dark ground; Underline - the character is to be underlined; and Dim - the character is to be displayed at lower than normal intensity. This leaves 2 unused bits per location.

Each time the raster scan logic advances from one column count to the next, a new character is addressed in the memory 44 and read out into a register 46. The 7-bit ASCII character code is clocked into the register 46 in the usual way by a pulse from the dot counter 43, as is the cursor bit and the attribute field continuation bit. This last bit is used to clock the attribute field itself into register 46, so that the attribute field previously entered into register 46 and used for the preceding character is left in register 46 undisturbed if the attribute field continuation bit is set for continuation of the preceding attribute field. Without discussing timing considerations in detail, it may be noted that the contents of a location of memory 44 are read out into register 46, processed, and the processed information is stored in further registers 52 and 54. Hence there is adequate latitude for the time delay involved in gating part of the information going into register 46 in accordance with other parts of the information going into the same register.

The 7-bit character code in register 46 is fed to a dot pattern generator 48 along with the line number from the line counter 47. This generator is a PROM of 2048 words each of 8 bits. The words are divided into blocks of 16 words each; each block contains the pattern for the character having, as its ASCII code, the address (top 7 bits) of that block. Inside each block, words 0 to 12 contain the pattern for the 13 lines forming the character (with lines 0, 11, and 12 containing blanks, of course); words 13 to 15 are unused. The output of the line counter 47 provides the last 4 bits of the address to the PROM, thereby addressing the appropriate one of the 13 words in the block, each word containing 1 line of the pattern. Within each line, the pattern is divided into 7 dots (dots 1 to 7 of the raster scan; dots 0 and 8 of the raster scan are blank). The word length is 8 bits; the 8th bit of line 11 is set for every character, and used for underlining purposes, as will be seen later.

The contents of the first 7 bits of the appropriate word of the selected character read out from PROM 48 are fed to a shift register 52, which is also fed with the dot pulses from oscillator 40. This shift register converts the 7-bit portion of the pattern from parallel to serial form.

The cursor bit and the 5-bit attribute field in the register 46 are fed, along with the 8th bit from PROM 48 and a pair of blank timing signals, to the video attribute generator 50, which is a PROM of 512 words each of 3 bits. The two blink timing signals run at different frequencies, e.g. 2 Hz and 1 Hz, so that the cursor (which always blinks) can be recognized even when it occurs in a blinking character; the two rates are used for the cursor and character blinking respectively. The PROM 50 stores, for each possible combination of the cursor bit, the 10th line bit (the underlining line), the 5 attribute bits, and the 2 blink signals, a 3-bit code which controls the manner in which the 7 bits for the current line of the current character, in shift register 56, are to be displayed. One of these 3 bits is a Dim signal bit, whose function is self-evident; the other two will be considered shortly. The 3-bit code is fed to a register 54.

The 7-bit serial output from shift register 52 and 2 of the code bits from register 54 are fed to a logic circuit 56. Taking the 2 code bits as CB1 and CB2 and the output of shift register 52 as DV1, the logic circuit 56 generates the logical function CB1.VD1 + CB2.VD1' .

This means that the first control bit CB1 allows the stream of 7 bits from register 52 to pass through unchanged, and the second control bit CB2 allows the complement of that stream of bits to pass through. Thus CB1 can be used to blank out the bit stream, for hide or blink purposes, and CB2 can be used to display the inverse. If both control bits are true, a stream of 1's is generated, producing a line of bright elements.

The video signal from logic circuit 56, the dim control bit from register 54, and the column and row sync signals from units 41 and 51 are fed to a transmission unit 73, which is clocked by the dot pulses from oscillator 40. This unit transmits the 4 signals to the display monitor, which includes monitor electronics 79 and the CRT 11 on the screen 10 of which the display appears. The unit 73 is designed to minimize loss of synchronization between the signals which it transmits, and to combine at its output the video signal and the dim signal. The combined video and dim signal and the two sync signals are used by the monitor electronics 79 to control the CRT 11 in the usual way.

As noted above, the display consists of 25 rows of characters. The last of these rows, row 24, is used as a status line in which a system message can be displayed or to display conditions produced within the display controller. These conditions are displayed in English words and can include a READY indicator, the modes of operation, error messages, and the current row and column position of the cursor.

The operator can elect to operate the display terminal in a roll mode (scrolling mode) in which, when the cursor is on row 23, receipt of a line feed character causes the contents of the screen to roll up (i.e., row 23 becomes blank and the previous contents of row 23 are displayed on row 22, etc., the data that was displayed on row 0 disappears from the screen, and the cursor remains on row 23).

Rolling of the screen data can also occur when data is entered at the end of row 23 (i.e., more than 80 displayable characters). The roll mode of operation allows successive rows of data to be received by the display terminal with only the last 24 rows of data being retained and displayed on the display screen of the CRT 11 at rows 0 to 23. If the terminal is operated in the non-roll mode (i.e., no scrolling), receipt of data past row 23 or a line feed character that follows row 23 does not cause the data to roll up and a data overflow message will be displayed on the status line (row 24).

This ability to roll rows 0 to 23 and hold row 24 fixed is accomplished by the refresh address generator 53, which is shown in detail in Figure 1A. The basic function of the generator 53 is to add the row value to the roll value mod. 24 (except for the last row on the display, row 24), multiply this result by 80 columns, and add this to the column counter. This provides the character address for the display's refresh memory 44. A roll register 90 provides a roll count for offsetting the accessing of the refresh memory 44 when any of rows 0 to 23 is being displayed. A rolled row generator PROM 91 effects the addition of the roll register output and the row number, and a row address generator PROM 92 effects the multiplication of the rolled row value by 80 and the partial addition of the result to the column count.

When data on the display screen is to be scrolled, a 5-bit roll count is loaded into a roll register 90. This 5-bit roll count is generated by logic (not shown) in the display controller and contains a value of from 0 to 23 which represents the number of rows that rows 0 to 23 on the display screen are to be rolled up. For example, when operating in the roll mode, when the logic of the display controller detects that a line feed has been entered when the cursor is located in row 23, the contents of the roll register are loaded with a value which is 1 greater than the previous value. This loading of the roll register 90 with the augmented roll value is done under firmware control.

The row number from row counter 49 and the roll count from roll register 90 are added together and a modulo 24 sum returned by rolled row generator PROM 91 when the count in row counter 49 is between 0 and 23. When the count in the row counter is 24, indicating that the status line (row 24) is being addressed, a result of 24 is output by rolled row generator PROM 91. For example, when the display controller is refreshing display row 21, the row counter 49 will have a row value (count) of 21 and if the information on the display screen has been scrolled up 5 rows, the roll register will have a roll count of 5. Rolled up generator PROM 91 in effect adds the row value of 21 to the roll value of 5 to get a sum of 26 and takes the sum modulo 24 (26 modulo 24 = 2) so that a relocated row value of 2 would be produced as bits 1 to 5 of the data output from roll row generator PROM 91.

This 5-bit relocated roll value of between 0 and 24 is then fed into row address generator PROM 92, which multiplies the relocated roll value by 5 and adds to the product the 3 most significant bits of the column count from column counter 45. The 7-bit result from row address generation PROM 92 is the 7 most significant bits of the 11-bit relocated refresh address used to access data in refresh memory 44. The 4 least significant bits of the refresh address used to access refresh memory 44 come directly from column counter 45 and complete the 11-bit address used in accessing one of 2,048 words in refresh memory 44.

The relocated row value of 2 corresponds to the block of addresses 160 to 239 in the refresh memory 44. The PROM 92 effects the necessary multiplication of the relocated row value by 80 to generate the base address of the corresponding block of locations in memory 44. Also, the appropriate location in the selected block has to be selected, under control of the column count from column counter 45, which means that the column count has to be added to the base address of the block of memory locations. Since the number of columns is $80 = 5 \times 2^4$, the bottom 4 bits of the column count appear simply as the bottom 4 bits of the required address. The top 3 bits, however, have to be added to the relocated row value. This addition is performed by the PROM 92, which is fed with the top 3 bits of the column count as well as with the relocated row value.

Considering PROM 91 in more detail, this is a 1024 x 5 bit unit which embodies a modified mod 24 addition table. The 5 bits from row counter 49 divide it into 32 blocks: blocks 0 to 23 for rows 0 to 23, block 24 for row 24, and 7 unused blocks, each block containing 32 locations. The 5 bits from the roll counter 90 select a location in the selected block. Block 0 contains the value 0 to 23 in locations 0 to 23 (with locations 24 to 31 unused); block 1 contains these values cyclically shifted by 1, i.e. 1 to 23 and 0; block 2 contains these values with another 1-step shift, i.e. 2 to 23, 0, and 1; and so on for blocks 0 to 23. Block 24 contains the value 24 in all 24 locations, since a row count of 24 selects row 24 regardless of the roll count.

Considering PROM 92 in more detail, this is a 256 x 7 bit unit which embodies a "times 5" and addition table. The rolled row value from PROM 91 divides it into 32 blocks, of which 25 (blocks 0 to 24) are used and the remaining 7 are unused. Each block contains 8 locations, of which locations 0 to 4 are used and the remaining 3 locations are unused. The total number of locations in use is thus $25 \times 5 = 125$, and these contain the values 0 to 124 in straight sequence. Thus in each block, the first location contains 5 times the relocated row number which selects that block, and the remaining locations in that block contain the sum of that product and the top 3 bits of the column number. The output value of between 0 to 124 from PROM 92 is effectively multiplied by 16 and has the bottom

0042292

- 11 -

4 bits of the column count added to it by concatenation to produce the final 11-bit address for the memory 44.

The updating of the roll counter 90, if required, is carried out during the horizontal flyback time (column counts 80 to 103), as is the generation of the relocated row value by PROM 91.

It is evident that PROM 92 could be dispensed with, with the relocated row value and the column count being merely concatenated, but at the cost of doubling the size of the memory 44 to accommodate the unused sections of memory which would as a result be scattered through the memory 44.

It is also evident that by suitably modifying the contents of PROM 91, additional stationary rows could be provided at the top or the bottom of the display, and it would even be possible to provide separate scrollings on different portions of the display.

CLAIMS

1. A video display system comprising:
   a display device (10,11) on which characters may be displayed in a matrix of rows and columns;
   a memory (44) having a plurality of storage locations which store the characters to be displayed;
   video row (49) and column (45) counters which select the locations on the display device; and
   addressing means (53) which generate, from the video row and column counts, the memory address of each character to be displayed, including a roll register (90) which defines the number of rows by which the display is to be scrolled and adding means which modularly add the roll count and the video row count,
   characterized in that
   the adding means (91) comprise means which, in response to certain predetermined video row count or counts, utilize that count or those counts for addressing the memory unmodified by the roll count, whereby a predetermined section of the memory has its contents displayed on a predetermined row or rows while the remainder of the memory has its contents scrollable on the display.

2. A system according to Claim 1, characterized in that the adding means (91) comprises a PROM addressed by the video row count and the roll count, the video row counts dividing the PROM into a corresponding plurality of blocks, those blocks corresponding to the predetermined video row count or counts being filled with the respective video row counts and the remaining blocks being filled with modular addition tables for the roll count and the respective video row counts.

3. A system according to either previous claim wherein the numner of columns (80) is an odd number (5) times a power of 2 ($2^4$), characterized in that the addressing means includes multiplying means (92) which multiply the output of the adding means by the odd number and add the product to the odd number portion of the video column count.

4. A system according to Claim 3, characterized in that the multiplying means comprise a PROM addressed by the adding means and the odd number portion of the video column count, the adding means outputs dividing the PROM into a corresponding plurality of blocks, each containing an addition table for the video column count based on the product of the respective adding means output and the odd number.

FIG.1

FIG.1A

1/1

0042292